# EUROPEAN PATENT SPECIFICATION

(11) **EP 2 716 156 B1**
(45) Date of publication and mention of the grant of the patent: **04.01.2017**
(21) Application number: 12792922.2
(22) Date of filing: 29.05.2012
(51) Int. Cl.: A01M 1/10, A01M 1/04

(54) **TRAP FOR FLYING INSECTS, THE USE OF SAID TRAP AND CORRESPONDING MANUFACTURING METHOD**
FALLE FÜR FLUGINSEKTEN, VERWENDUNG DIESER FALLE UND HERSTELLUNGSVERFAHREN DAFÜR
PIÈGE POUR INSECTES EN VOLANE UTILISATION DUDIT PIÈGE, ET SON PROCÉDÉ DE FABRICATION

(30) Priority: 01.06.2011 ES 201130907
(43) Date of publication of application: 09.04.2014
(73) Proprietor: Probodelt S.L., 43870 Amposta (Tarragona) (ES)
(72) Inventor: RAMONEDA MOLINS, Joan Evangelista, 43870 Amposta (Tarragona) (ES); ROIG REVERTÉ,Jordi, 43870 Amposta (Tarragona) (ES)
(74) Representative: Isern-Jara, Nuria
(86) International application number: PCT/ES2012/070393
(87) International publication number: WO 2012/164132

(56) References cited:
- WO-A1-2010/109427
- ES-U- 1 069 468
- ES-U- 1 072 529
- ES-U- 1 072 529
- GB-A- 2 258 130
- US-A- 4 112 609
- US-A- 4 400 903
- US-A- 4 471 563
- US-A1- 2008 156 799
- US-A1- 2009 126 257

## Description

### Field of the invention

The invention relates to a trap for flying insects that includes an inner chamber for confining the insects and that is accessible via at least one access entry suitable for said insects.

The invention also relates to the use of a sheet for manufacturing a trap according to the invention, and to a manufacturing method of the trap of the invention.

In the invention, the concept of a " flying insect" means that the trap is intended for fighting insects in the final stage of their metamorphosis, in which they can already fly. The flying phase is when the insects have reached sexual maturity and therefore reproduce and disperse their population, thereby increasing damage to crops. It is at this stage that insects can result in harmful pests.

### State of the art

One of the negative consequences of globalisation includes the ease with which pests of insect can spread. One of the most significant sources of this global spread comes from importing and exporting fruit and vegetables from all over the world, particularly between continents. These transported products can be carriers of exotic insect species or larvae thereof, and be accidentally introduced into the destination countries of such products. Some of these species easily adapt to the new environment and eventually become agricultural pests.

On the other hand, in recent years organic methods of pest control on farms has increased in popularity and, in particular, in fruit-tree farming. The conventional pesticide spraying of farms has been gradually replaced by mass-trapping techniques. Trapping consists of attracting the insect into a confinement chamber of a closed trap by means of using pheromone attractants and/or foodstuffs. Once the insect is on the inside of the chamber, it is difficult for them to find the way out. Furthermore, an insecticide is added to the inside of these traps, being responsible for killing the insect once it has entered the confinement chamber.

Based on documents ES 1074165 and ES 1072529, from this Applicant, traps intended for mass trapping of pests of fruit-eating insects such as *Ceratitis capitata* and *Bactrocera oleae,* better known as the Mediterranean fruit fly and the olive fruit fly, respectively, are known. This type of trap is particularly effective for mass trapping, but the volume occupied negatively impacts shipping, making it difficult to market in countries that are far from the manufacturer.

US 4 112 609 A discloses a prefabricated disposable fly trap blank that includes an inner chamber for confining insects, the chamber being defined by one flexible sheet which can form a three-dimensional body, the chamber being also defined by a base, which comprises a first flexible sheet, and a cover.

### Summary of the Invention

The invention aims to provide a trap for flying insects that can be manufactured in a single manufacturing facility locally, but used globally at a reasonable cost and all without the traps of prior art becoming less effective. This purpose is achieved by means of a trap for insects according to claim 1.

Indeed the configuration of the trap means at least part of the trap is simply a stackable sheet thereby saving space and therefore is easier to transport anywhere in the world at a reasonable cost. The other parts of the trap are made such that they are stackable to minimise the space occupied.

The chamber is defined by a base and a lid, and the base comprises a first flexible sheet provided with first closing means for securing said closed position, and means suitable for forming the access entry to said chamber in said position closed, and the base can be coupled to the lid by means of a first coupling means. These closing means are configured such that the trap can be assembled and disassembled and therefore it can be stored again occupying a small space.

In the invention, the means suitable for forming an access entry relate to an element that make it possible to create an access opening to the inside of the chamber. For example, as will be seen later in the description, the structure of the sheet itself can create this opening. Alternatively, the sheet may be pre-scored so the user can tear off the piece of sheet to access the inner chamber. It can also be an orifice that has been already created on the sheet.

Furthermore, the invention encompasses a number of preferred features which are the object of the dependent claims and the usefulness of which will be highlighted later in the detailed description of an embodiment of the invention.

There are certain species of flying insects, for example, certain flies such as the frugivorous *Ceratitis capitata* and the *Dacus oleae* which are attracted by brightness. Therefore, the lid preferably comprises a translucent or transparent zone through which external light may enter said chamber. Once the insect has entered the chamber, it will tend to go towards the light and therefore remain in the trap for longer, allowing time for the insecticide to take effect.

Optionally, the base is opaque in order to attract certain types of insects such as flies like the Ceratitis capitata or Dacus Oleae, which are attracted to certain colours.

In mass trapping, a large number of traps per hectare of crop should be mounted. To facilitate assembly of the trap according to the invention, the means are preferably at least one entry serving as an entry orifice for insects, being preformed in the first sheet.

It was also found that for certain species of flies such traps are more effective if the entry openings in the inner chamber are a conduit facing the inside of the chamber. These conduits can be retrofitted. Nonetheless, to facilitate the preparation of trapping, it is preferable that the orifice extends to form a frustoconical conduit that protrudes from the main surface of the first sheet. Thus, despite having pre-assembled conduits, the sheet can be stacked easily and the transport volume is reduced. Optionally, the base of the trap according to the invention comprises an upper truncated cone formed by the first sheet which can be coupled to the lid and a lower, hollow, convex portion and the truncated cone and the convex portion are connected by means of a number of second mutual coupling means. In trials conducted for trapping *Ceratitis capitata* it has been found that the concave shapes and particularly the revolving configuration encouraged insects to go near and enter the traps. The lower convex portion, on being hollow and convex, is easily stackable and therefore transportable. Also by having mutual coupling means the trap can be assembled easily.

Particularly preferably, in the transition area between the truncated cone and the convex portion, the side surface of the base is substantially smooth. By substantially smooth, in the invention it is understood that a step greater than the thickness of one of the parts will not be formed.

Preferably, the trap comprises a truncated cone whose smaller base forms an access opening to the chamber and is pointing towards the inside of the chamber. This system has the additional advantage of having a greater surface area for the insects to position themselves before entering the chamber (maximum opening of the truncated cone) without having to increase the size of the lid, with the resulting savings in material and space.

The trap preferably comprises a second cone arranged such that said smaller base of the truncated cone points towards the apex of the second cone and in that the apex of the cone comprises an outlet for liquid and the inner surface of the truncated cone is substantially smooth. It was found that once certain types of insects such as butterflies land on the trap they do not walk very much and are captured when they slide on the smooth slope that leads to a confinement chamber.

In order to further reduce the space occupied by the trap when disassembled, the lid comprises a second flexible sheet that can be rolled, being provided with second closing means for securing the closed position. In this way, the lids can be packaged in an exceptionally compact form as the lid and base are formed by a sheet.

Another object of the invention is to reduce production costs. To that end, the first and second sheets are preferably specularly symmetrical. Thus, the sheets can be made using only one tool prior to assembling the trap.

In another embodiment, the cover is a second flat sheet that can be mounted to the base by means of the aforementioned coupling means, to simplify the way it is manufactured and stored.

In an alternative embodiment, the trap has a second sheet in the shape of a truncated cone whose smaller base forms an access opening to the chamber and is pointing towards the inside of the chamber and further comprises a laminar receptacle. By using the laminar bag-type receptacle, manufacturing the trap and its storage is simplified and production costs are reduced.

Particularly preferably, the trap is made from biodegradable or biocompostable material, which avoids having to collect the traps once the season is over.

The invention also relates to use of a flexible sheet that can be rolled in the manufacture of a trap for flying insects.

Similarly, the invention proposes a method for manufacturing a trap for flying insects that includes an inner chamber for confining the insects and that is accessible to the insects via at least one access entry suitable for said insects. To this end, the method comprises the steps for forming at least a portion of the trap by rolling a flexible sheet from an open position to a closed position to form a three-dimensional body that is open at least at one of the ends thereof.

Preferably, the method comprises a step for fixing said closed position of said sheet by means of a first removable closing means.

The trap comprises a base and a lid in the method comprising a number of steps in which the first sheet is rolled into the shape of an upper truncated cone that can be coupled to the lid by means of a first coupling means, and a lower, hollow convex portion is connected to the smaller base of said truncated cone by means of second mutual coupling means.

Preferably, the method further comprises a step for forming the lid by rolling a second flexible sheet from an open position to a closed position to form an open three-dimensional body at least at one of their ends thereof by means of a second closing means for securing said closed position.

Furthermore, the invention also encompasses other detailed characteristics shown in the detailed description of an embodiment of the invention and in the accompanying figures.

### Brief description of the drawings

Other advantages and characteristics of the invention will become apparent from the following description in which, without limitation, preferred embodiments of the invention are explained, with reference to the accompanying drawings. The figures show:
Fig. 1 is a sectioned view of a plurality of first stacked sheets intended for the manufacture of a first embodiment of the trap according to the invention.
Fig. 2 is a top plan view of the first sheet when open.
Fig. 3 is a perspective view of the first embodiment of the trap according to the invention.
Fig. 4 is a longitudinally sectioned view along a central plane of the trap of Figure 3.
Fig. 5 is a top plan view of the first sheet intended for manufacturing a second embodiment of the invention.
Figs. 6A and 6B are an enlarged and longitudinally cut view of the sequence of conversion of the means that are suitable for forming a side access entry by inserting an access conduit to the confinement chamber of the trap.
Fig. 7 is a longitudinally sectioned view of the second embodiment of the trap according to the invention in an assembled state.
Fig. 8 is a perspective view of a third embodiment of the trap according to the invention.
Figs. 9A and 9B are an assembly sequence of the base of the trap of Figure 8.
Fig. 10 is a longitudinally sectioned view along a central plane of the trap of Figure 8.
Figs. 11 A and 11 B are perspective views of a fourth embodiment of the trap according to the invention.
Fig. 12 is a longitudinally sectioned schematic view along a central plane of a fifth embodiment of the trap according to the invention.
Fig. 13 is a longitudinally sectioned schematic view along a central plane of a sixth embodiment of the trap according to the invention.
Fig. 14 is a longitudinally sectioned schematic view along a central plane of a seventh embodiment of the trap according to the invention.

### Detailed description of a number of embodiments of the invention

Various embodiments of the trap according to the invention are shown hereinafter. These traps 1 are intended for any flying insect, and in particular Diptera and Lepidoptera.

As seen in the figures, the trap for flying insects generally includes an inner chamber 2 for confining the insects and that is accessible via at least one access entry suitable for said insects. In other words, the entry must allow access to the trap 1 but making it difficult for the insects to exit once they are in the chamber 2. As shown in the figures, the chamber 2 is defined by at least one sheet 8, 30 which in some cases forms the lid 6 of the trap 1. In other cases it forms the base 4, and in some embodiments the whole trap 1 is formed using sheets. In all cases, the embodiments show that the sheet 8,30 is flexible and can be rolled from an open position to a closed position, forming a three-dimensional body that is open at least at one of the ends thereof. Thus, in the invention, the sheet must always be developed such that it is substantially flat for easy storage and transportation.

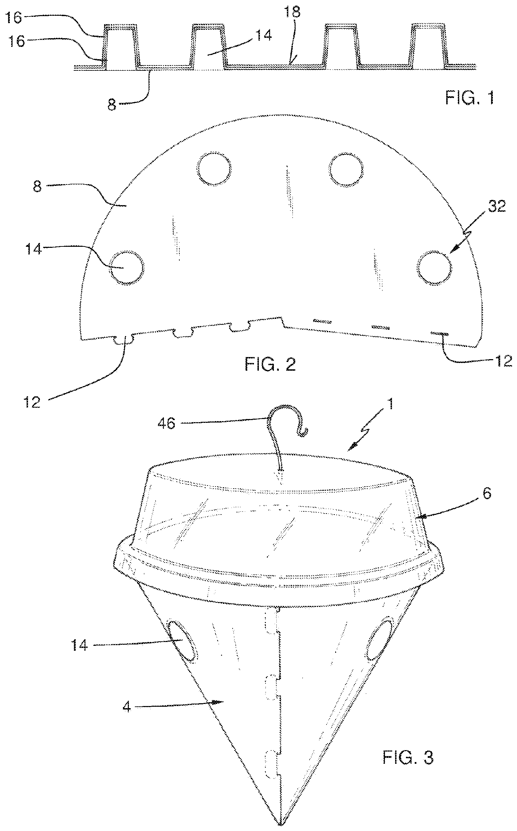

In a first embodiment shown in Figures 1 to 4, the trap 1 comprises an inner chamber 2 for confining insects defined by a base 4 and a lid 6.

In this case, the base 4 is formed by a first flexible sheet 8 that can be rolled and is provided with a first closing means 12 for securing the closed position. To that this, the first flexible sheet is rolled 8 from the open position shown in Figure 2, which is completely flat, to the closed position in order to form a three-dimensional body closed laterally and open at least at one of the ends thereof. To assemble the trap 1 for trapping, once the base 4 has been mounted inside, an attractant diffuser 42 is deposited inside and a diffuser or insecticide tablet 44 such as vapona or the inside of the lid and/or the base is impregnated with a pyrethroid insecticide 44. Once this has been done, the operator places the lid 6 on the base 4 closing it by using the mutual coupling means, which in the case shown is simply a coupling by clamping between the top edge of the cone and the flap 40.

As also seen in the figures, the base 4 comprises a number of means 32 suitable for forming a side access entry to said chamber 2. In this first embodiment the means 32 consist of an entry orifice 14 for insects preformed in the first sheet 8 and which extends to form a frustoconical conduit 16 protruding from the main surface 18 of the first sheet 8.

This embodiment of the trap 1 is especially useful for frugivorous flying insects such as the *Ceratitis capitata* or *Dacus oleae.* For this, the base 4 is opaque, while the lid 6 is translucent or transparent. Thus, once they have penetrated the chamber 2 this type of insect usually tries to find a way out through the translucent or transparent lid 6. This moves them away from the actual exit of the trap 1 via the conduits 16 and prolongs the length of time they remain in the chamber 2. The more time the fly is in the chamber 2, the more time there is for the insecticide to take effect, and therefore kill the insect.

It should be noted that the base 4 need not be completely opaque nor the lid 6 completely translucent or transparent. However, it seems particularly appropriate that, at a minimum, the area of the conduits 16 is opaque and in colours that attracts the target species.

In this embodiment, both the base 4 and the lid 6 are manufactured by thermoforming sheets of polyethylene terephthalate, better known in the art as PET, approximately 0.5 mm thick. First, this represents considerable savings of material in respect of known traps of the prior art that had been previously manufactured in thermoplastics such as injected polypropylene (PP). This therefore reduces the weight to be transported. However, in this type of product it is precisely the volume occupied which is the most critical parameter in respect of being able to market globally. Thus, as seen in Figure 1, the base 4 is easily stackable by the frustoconical shaped conduits 16. Similarly, due to the cone taper, the lid 6 can also be easily stacked.

The first sheet 8 is smooth such that in its closed position the outer surface of the cone does not have sharp edges, in other words, the surface is substantially, completely smooth except for the seal line of the base 4. This prevents flies from taking flight once they land on the base 4.

It should also be mentioned that in this embodiment the thermoformed lid makes it difficult to hang the trap 1 from the fruit tree. To resolve this problem, the invention provides a hook 46 for hanging which ends in a hooked wire 48. The hook 46 can pierce the lid 6 and once inserted it remains in an inserted position 5 by means of the hooked wire 48. This hook may be made of wire, but it is preferably made of injected plastic, which reduces its weight and makes it easy to transport.

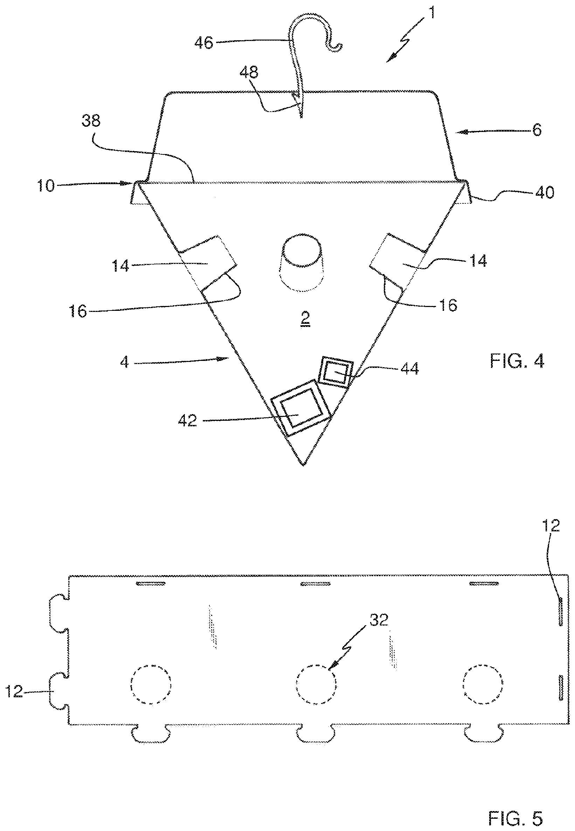

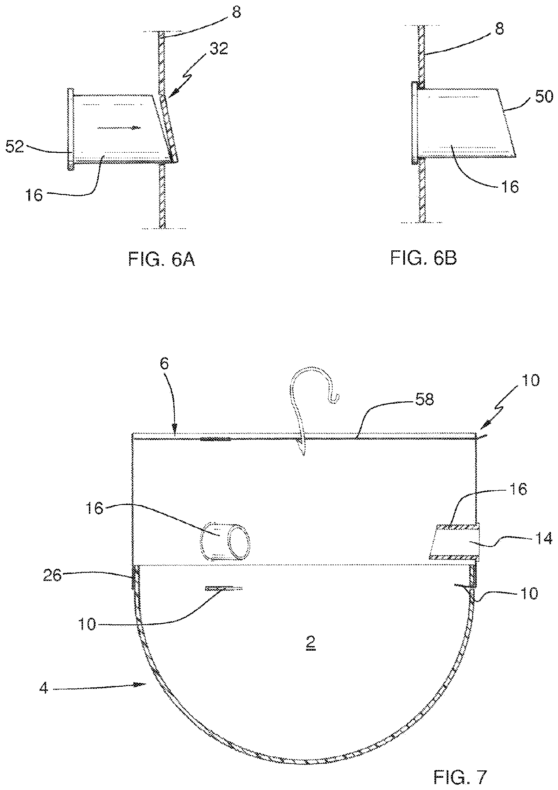

Figures 5 to 7 show a second embodiment of the trap 1, in which the base 4 further comprises a first flexible sheet 8 rolled to form a cylinder.

As shown in Figure 5, in this case, the means 32 suitable for forming a side access entry to the chamber 2 are formed by previously punching the first sheet 8. Therefore, to create the orifices 14, a number of lateral conduits are provided 16 separate from the first sheet 8 and are angled at the end where they are inserted. In this way, in order to assemble trap 1, the operator must firstly pierce the means 32 with the angled end 50 of the conduit 16 and insert it until the rim 52 abuts the outer surface of the first sheet 8.

The base 4 further comprises a lower, hollow convex portion 20, in particular hemispherical, made from injected plastic. The first sheet 8 and the convex portion 20 are connected by means of a second mutual coupling means 22.

Unlike the first embodiment, the lid 6 of the trap 1 is simply a flat, flexible and transparent sheet 58 attached to the base 4 by means of the first coupling means 10. The flat sheet 58 that forms the lid 6 can be simply punched. It should be mentioned that in respect of the sheet of the lid 6 it could have a larger diameter than the cylinder of the base 4, to prevent water from penetrating into the trap 1 when it rains. Also alternatively, the bottom of the base could have a drainage passage, not shown in the figures, to prevent the accumulation of rain water.

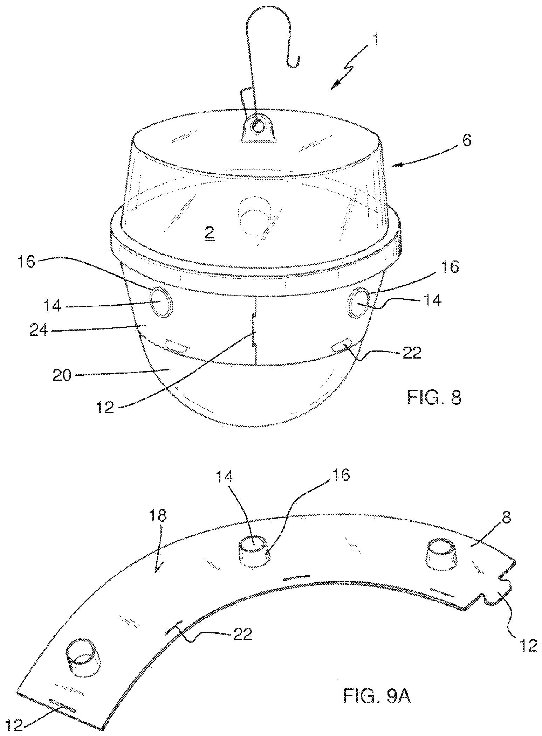

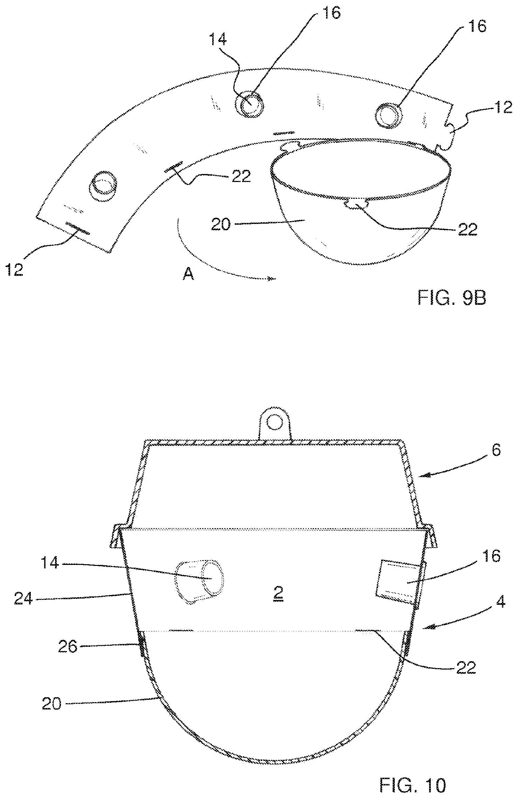

Figures 8 and 10 show a third embodiment of the trap 1 according to the invention. In this case, the base 4 comprises an upper truncated cone 24 made from the first sheet 8 and which can be coupled to the lid 6 as explained above. Also as in the previous embodiment, the base 4 further has a lower, hollow convex portion 20.

Figures 9A and 9B explain the procedure for assembling the trap 1. Firstly, the conduits 16 are assembled on the first sheet 8. Then, the first sheet 8 is coupled to the convex portion 20 by inserting the tabs of the second coupling means 22 in the corresponding grooves provided in the first sheet 8. Once the first sheet 8 is rolled and assembled around the convex portion 20 of the base, the first closing means 12 are closed to complete the assembly of the base 4. It is important to highlight that, particularly preferably, in the transition area 26 between the truncated cone 24 and the convex portion 20, the side surface of the base 4 is substantially smooth. By substantially smooth, it is understood that in the transition zone 26, steps larger than the thickness of the first sheet 8, which as mentioned is particularly thin, are not formed. It should be noted at this point that the first sheet 8 should be particularly thin and preferably less than 0.5 mm thick.

Also, although not shown in the figures, the convex portion 20 can be made by thermoforming to reduce the amount of material used during manufacturing.

The invention also aims to create a trap 1 which is particularly environmentally friendly. Therefore, preferably, all the parts which form the base 4 and the lid 6 are made from a biodegradable or biocompostable material such as cardboard or compounds derived from PLA (polylactic acid). If using materials such as cardboard as the first sheet 8 of this embodiment, it can be manufactured by stamping as it does not have preformed conduits 16. Preferably, the cardboard should be treated for protection against moisture to prevent the trap 1 from becoming damaged in the event of rain.

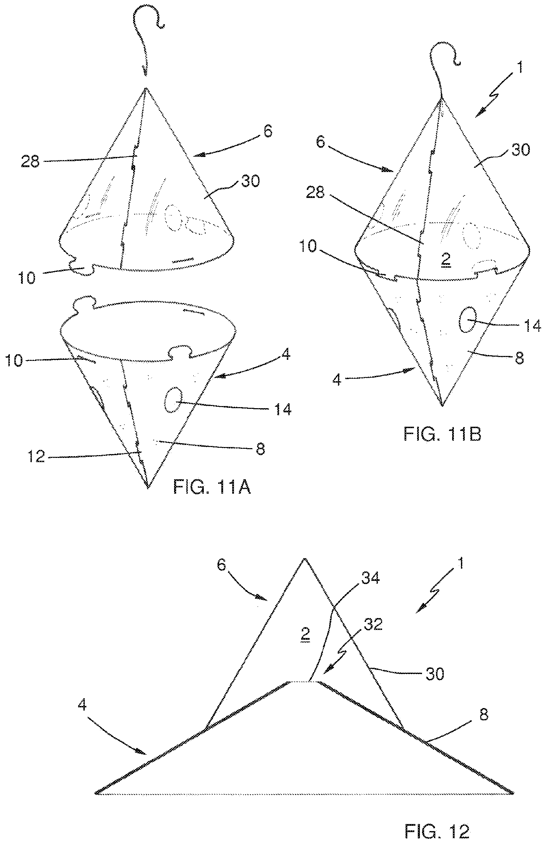

Figures 11 A and 11 B show a fourth embodiment of the invention. In this case, both the base 4 and the lid 6 are manufactured from first and second sheets 8, 30 that can be rolled respectively forming a cone. The second sheet 30, as in the first embodiment, is provided with second closing means 28 for securing the closed position of the cone. A particular characteristic in this embodiment is that the first and second starting sheets 8, 30, namely when the trap is unassembled, are identical as they are specularly symmetrical. The coupling means 10 between the lid 6 and the base 4 are formed by two tabs and two grooves such that when turning the base 4 90° relative to the lid 6 they can be easily fitted together. The trap 1 is particularly simple to manufacture since one same die can manufacture the lid 6 and the base 4.

In this case, storage and transport are extremely simple as the base 4 and the lid 6 are merely a plurality of stacked sheets, so as to reduce the transport volume to the absolute minimum.

In this embodiment the means 32 which are suitable for forming a side access entry to the chamber 2 simply comprise stamping on the sheets 8, 30. When mounting the trap 1, the operator simply has to pull the parts of the sheet that 35 open the orifices 14 of the base 4 and not pierce the second sheet 30 of the lid 6. In other words, in this case the trap 1 dispenses of the entry conduits rather than if they had other embodiments. However, and if necessary, additional tubes may also be assembled to form access conduits to the chamber 2.

For this embodiment it should be mentioned that it is not essential to the invention that the lid 4 and base 6 are identical. Optionally, and for those countries where the climate is humid, it is foreseen that the base of the cone of the lid 6 will be larger than the base of the cone of the base 4. In this way, the lid 6 overlaps the base 4 and protects it from the rain. Also as a result of this, a flap is formed which makes it difficult for the insects as they climb up the base 4 and get close to the lid 6 moving away from the orifices 14, as they come up against a barrier thanks to the flap of the lid 6.

For simplicity, Figures 12 to 14 show only the cutting plane. Nonetheless, these embodiments also comprise a sheet that can be rolled. As seen in the figures, these embodiments are particularly compact and can be easily transported, as the traps are manufactured exclusively from sheets that can be rolled or from folding laminar material. Figure 12 shows a trap which is particularly useful for diptera such as *Ceratitis capitata.* As shown, the base 4 is formed by a first sheet 8 that can be rolled which is a truncated cone whose smaller base forms the means 32 which are suitable for forming access entry, as the access opening 34 is formed once it has been rolled. The smaller base is positioned such that it points towards the inside of said chamber 2. In this case, the lid 6 is a second cone formed from a second sheet 30 which can be rolled. The trap 1 is assembled such that the smaller base of the truncated cone of the lid 4 points towards the apex of the second cone of the lid 6.

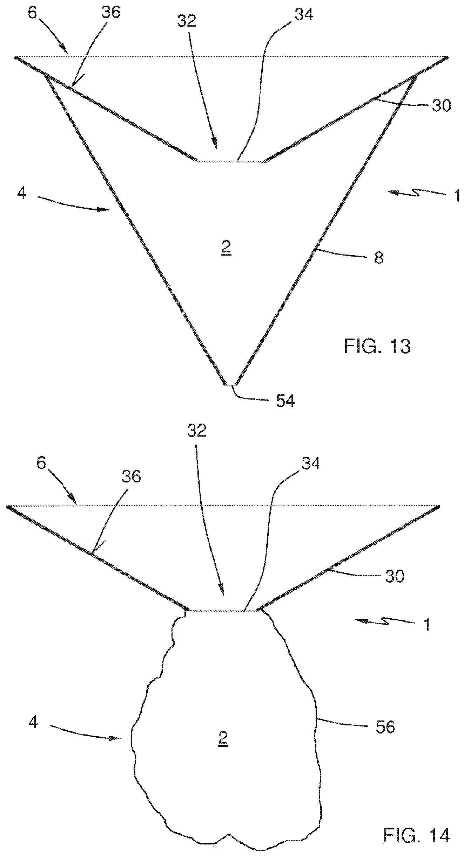

The embodiments of Figures 13 and 14 are particularly suitable for trapping Lepidoptera. Lepidoptera walk very little and it is advisable to make it easier for them to drop into the chamber 2. Therefore, the inner surface of the truncated cone which forms the lids 6 is smooth and slippery.

The trap 1 is virtually identical to that shown in Figure 12, but its direction is reversed. Therefore, in this case, the lid 6 comprises a second flexible sheet 30 that can be rolled and is provided with second closing means, not shown in Figure 13, to secure the closed position.

To prevent the accumulation of liquid in the trap 1 in this case the apex of the cone of the base 4 comprises an outlet 54 for liquid.

Finally, in the seventh embodiment of the trap 1 according to the invention, the second sheet 30 has a truncated cone and its smaller base forms an access opening 34 to the chamber 2. The smaller base is positioned such that it points towards the inside of the chamber 2. Additionally, the base 4 consists of a laminar receptacle 56 that can be folded like a bag.

## Claims

1. A trap for flying insects that includes an inner chamber (2) for confining insects and that is accessible via at least one access entry suitable for said insects, the chamber (2) being defined by at least one flexible sheet (8,30) that can be rolled from an open position to a closed position, forming a three-dimensional body that is open at least at one of the ends thereof, wherein said chamber (2) is defined by a base (4) and a cover (6), and wherein
[a] said base (4) comprises a first flexible sheet (8) that can be rolled and is provided with first closing means (12) to secure said closed position, and means (32) suitable for forming said access entry to said chamber (2) in said closed position, and [b] said base (4) can be coupled to said lid (6) by means of a first coupling means (10),
**characterised in that** said base (4) comprises an upper truncated cone (24) formed by said first sheet (8) which can be coupled to said lid (6) and a lower, hollow convex portion (20) and **in that** said truncated cone (24) and said convex portion (20) are connected by means of second mutual coupling means (22).

2. A trap according to claim 1, **characterised in that** said lid (6) comprises a translucent or transparent zone through which external light may enter said chamber (2).

3. A trap according to claim 1 or 2, **characterised in that** said base (4) is opaque.

4. A trap according to any of the claims 1 to 3, **characterised in that** said means (32) are at least one entry in the form of an access orifice (14) for insects, pre-formed in said first sheet (8).

5. A trap according to claim 4, **characterised in that** said orifice (14) extends to form a frustoconical conduit (16) protruding from the main surface (18) of said first sheet (8).

6. A trap according to claim 1, **characterised in that** the lateral surface of said base (4) is substantially smooth in the transition zone (26) between said truncated cone (24) and said convex portion (20).

7. A trap according to any of the claims 1 to 6, **characterised in that** it comprises a truncated cone whose smaller base forms an access opening (34) to said chamber (2) and is positioned such that it points towards the inside of said chamber (2).

8. A trap according to claim 7, **characterised in that** it comprises a second cone arranged such that said smaller base of said truncated cone points towards the apex of said second cone and **in that** the apex of said cone comprises an (54) outlet for liquid and the inner surface of said truncated cone is substantially smooth.

9. A trap according to any of the claims 1 to 8, **characterised in that** said lid (6) comprises a second flexible sheet (30) that can be rolled and is provided with second closing means (28) to secure said closed position.

10. A trap according to claim 9, **characterised in that** said first and second sheets (8,30) are specularly symmetrical.

11. A trap according to any of the claims 1 to 6, **characterised in that** said lid (6) is a flat sheet (58).

12. A trap according to claim 1, **characterised in that** it has a second sheet (30) in the shape of a truncated cone whose smaller base forms an access opening (34) to said chamber (2) and is pointing towards the inside of said chamber (2) and further comprises a laminar receptacle (56).

13. A trap according to any of the claims 1 to 10, **characterised in that** it is made from biodegradable or biocompostable material.

14. A method for manufacturing a trap for flying insects that includes an inner chamber (2) for confining the insects and that is accessible for the insects via at least one access entry suitable for said insects, comprising steps of:
a. forming at least a portion of said trap (1) by rolling a flexible sheet (8,30) from an open position to a closed position to form a three-dimensional body that is open at least at one of the ends thereof;
b. attaching said closed position of said sheet (8,30) by means of first closing means (12);
**characterised in that** said trap comprises a base (4) and a lid (6) and it additionally comprises a number of steps in which:
c. said first sheet (8) is rolled in the shape of an upper truncated cone (24) that can be coupled to said lid (6) by means of first coupling means (10); and
d. a lower, hollow convex portion (20) is connected to the smaller base of said truncated cone (24) by means of second mutual coupling means (22).

15. A method according to claim 14, **characterised in that** it further comprises a step for forming said lid (6) by rolling a second flexible sheet (30) from an open position to a closed position to form an open three-dimensional body at least at one of the ends thereof by means of second closing means (28) to secure said closed position.

## Patentansprüche

1. Falle für Fluginsekten, die eine innere Kammer (2) aufweist, um die Insekten einzusperren und die durch mindestens einen für besagte Insekten geeigneten Eingang zugänglich ist, wobei die Kammer (2) durch mindestens eine flexible Folie (8,30) definiert wird, welche von einer offenen Position in eine geschlossene Position gerollt werden kann, die einen dreidimensionalen Körper bildet, der an mindestens einem seiner Enden offen ist, wobei besagte Kammer (2) definiert wird durch ein Unterteil (4) und ein Oberteil (6), und wobei
[a] besagtes Unterteil (4) eine erste flexible Folie (8) aufweist, die gerollt werden kann und die mit einem ersten Schliessmittel (12) zur Fixierung der besagten geschlossenen Position sowie mit einem Mittel (32) ausgestattet ist, das geeignet ist, diesen Zugang zur besagten Kammer (2) in besagter geschlossenen Position zu bilden, und wobei [b] besagtes Unterteil (4) an besagtem Oberteil (6) durch ein erstes Verbindungsmittel (10) befestigt werden kann,
**dadurch gekennzeichnet, dass** besagtes Unterteil (4) einen oberen Kegelstumpf (24), welcher durch besagte erste Folie (8) gebildet wird und an besagtem Oberteil (6) befestigt werden kann, sowie einen unteren, hohlen, konvexen Bereich (20) aufweist, und dadurch, dass der besagte Kegelstumpf (24) und der besagte konvexe Bereich (20) durch ein zweites gegenseitiges Verbindungsmittel (22) verbunden sind.

2. Falle nach Anspruch 1, **dadurch gekennzeichnet, dass** besagtes Oberteil (6) eine lichtdurchlässige oder transparente Zone aufweist, durch welche Licht von aussen in besagte Kammer (2) einfallen kann.

3. Falle nach Anspruch 1 oder 2, **dadurch gekennzeichnet, dass** das besagte Unterteil (4) lichtundurchlässig ist.

4. Falle nach einem der Ansprüche 1 bis 3, **dadurch gekennzeichnet, dass** das besagte Mittel (32) zumindest einen Eingang in Form einer Zutrittsöffnung (14) für Insekten darstellt, die in besagter ersten Folie (8) vorgeformt ist.

5. Falle nach Anspruch 4, **dadurch gekennzeichnet, dass** sich die besagte Öffnung (14) erstreckt, um einen Kanal (16) in Form eines Kegelstumpfes zu bilden, welcher aus der Hauptfläche (18) der besagten ersten Folie (8) hervorragt.

6. Falle nach Anspruch 1, **dadurch gekennzeichnet, dass** die seitliche Oberfläche des besagten Unterteils (4) in der Übergangszone (26) zwischen besagtem Kegelstumpf (24) und besagtem konvexen Bereich (20) im wesentlichen glatt ist.

7. Falle nach einem der Ansprüche 1 bis 6, **dadurch gekennzeichnet, dass** sie einen Kegelstumpf umfasst, dessen kleinere Basis eine Zutrittsöffnung (34) zur besagten Kammer (2) bildet und derart angeordnet ist, dass sie ins Innere der besagten Kammer (2) zeigt.

8. Falle nach Anspruch 7, **dadurch gekennzeichnet, dass** sie einen zweiten Kegel aufweist, der derart angeordnet ist, dass besagte kleinere Basis des Kegelstumpfs gegen die Spitze des besagten zweiten Kegels gerichtet ist, und dadurch, dass die Spitze des besagten Kegels einen (54) Auslass für eine Flüssigkeit umfasst und die innere Fläche des besagten Kegelstumpfes im wesentlichen glatt ist.

9. Falle nach einem der Ansprüche 1 bis 8, **dadurch gekennzeichnet, dass** besagtes Oberteil (6) eine zweite flexible Folie (30) umfasst, welche gerollt werden kann und mit zweiten Schliessmitteln (28) ausgestattet ist, um besagte geschlossene Position zu fixieren.

10. Falle nach Anspruch 9, **dadurch gekennzeichnet, dass** die besagten ersten und zweiten Folien (8,30) spiegelsymmetrisch sind.

11. Falle nach einem der Ansprüche 1 bis 6, **dadurch gekennzeichnet, dass** besagtes Oberteil (6) eine flache Folie (58) darstellt.

12. Falle nach Anspruch 1, **dadurch gekennzeichnet, dass** sie eine zweite Folie (30) in Form eines Kegelstumpfes aufweist, dessen kleinere Basis eine Zutrittsöffnung (34) zu besagter Kammer (2) bildet und gegen das Innere der besagten Kammer (2) zeigt, sowie zusätzlich einen laminaren Behälter (56) umfasst.

13. Falle nach einem der Ansprüche 1 bis 10, **dadurch gekennzeichnet, dass** sie aus biologisch abbaubarem oder in Biokompost überführbarem Material besteht.

14. Verfahren zur Herstellung einer Falle für Fluginsekten, die eine innere Kammer (2) zum Einsperren der Insekten umfasst und die für die Insekten durch mindestens einen für die besagten Insekten geeigneten Eingang zugänglich ist, wobei es folgende Schritte umfasst:
a. Bildung von zumindest einem Bereich der besagten Falle (1) durch das Ausrollen einer flexiblen Folie (8,30) von einer offenen Position in eine geschlossene Position zur Bildung eines dreidimensionalen Körpers, der an wenigstens einem seiner Enden offen ist;
b. Befestigung der besagten geschlossenen Position besagter Folie (8,30) mit Hilfe eines ersten Schliessmittels (12);
**dadurch gekennzeichnet, dass** besagte Falle ein Unterteil (4) und ein Oberteil (6) umfasst, und dass es zusätzlich eine Anzahl von Schritten umfasst, in welchen:
c. besagte erste Folie (8) in die Form eines oberen Kegelstumpfes (24) gerollt wird, der mit Hilfe eines ersten Verbindungsmittels (10) an besagtem Oberteil (6) befestigt werden kann (10); und
d. ein unterer, hohler konvexer Bereich (20) mit Hilfe eines zweiten gegenseitigen Verbindungsmittels (22) mit der kleineren Basis des besagten Kegelstumpfes (24) verbunden wird.

15. Verfahren nach Anspruch 14, **dadurch gekennzeichnet, dass** es zusätzlich einen Schritt zur Bildung des besagten Oberteils (6) umfasst, indem eine zweite flexible Folie (30) von einer offenen Position in eine geschlossene Position gerollt wird, um einen an wenigstens einem von dessen Enden offenen dreidimensionalen Körper mit Hilfe eines zweiten Schliessmittels (28) zu bilden, um die besagte geschlossene Position zu fixieren.

## Revendications

1. Piège pour insectes volants qui inclut une chambre intérieure (2) pour confiner les insectes et qui est accessible à travers au moins une entrée d'accès appropriée pour lesdits insectes, la chambre (2) étant définie par au moins une feuille flexible (8,30) qui peut être roulée à partir d'une position ouverte vers une position fermée, formant un corps tridimensionnel qui est ouvert dans au moins une de ses extrémités, dans lequel ladite chambre (2) est définie par une base (4) et une couverture (6), et dans lequel
[a] ladite base (4) comprend une première feuille flexible (8) qui peut être roulée et qui est pourvue d'un premier moyen de fermeture (12) pour fixer ladite position fermée, et un moyen (32) approprié pour former ladite entrée d'accès à cette chambre (2) dans ladite position fermée, et [b] ladite base (4) peut être connectée à ce couvercle (6) à travers un premier moyen de couplage (10),
**caractérisé en ce que** ladite base (4) comprend un tronc de cône supérieur (24) formé par ladite première feuille (8) qui peut être connectée à ce couvercle (6) et une partie inférieure, creuse, convexe (20) et **en ce que** ledit tronc de cône (24) et ladite partie convexe (20) sont connectés à travers un deuxième moyen de couplage (22) mutuel.

2. Piège selon la revendication 1, **caractérisé en ce que** ledit couvercle (6) comprend une zone translucide ou transparente à travers laquelle la lumière extérieure peut entrer dans ladite chambre (2).

3. Piège selon la revendication 1 ou 2, **caractérisé en ce que** ladite base (4) est opaque.

4. Piège selon l'une quelconque des revendications 1 à 3, **caractérisé en ce que** ledit moyen (32) est pour le moins une entrée dans la forme d'un orifice d'accès (14) pour insectes, préformé dans ladite première feuille (8).

5. Piège selon la revendication 4, **caractérisé en ce que** ledit orifice (14) s'étend pour former un conduit tronconique (16) qui fait saillie de la surface principale (18) de ladite première feuille (8).

6. Piège selon la revendication 1, **caractérisé en ce que** la surface latérale de ladite base (4) est substantiellement lisse dans la zone de transition (26) entre ledit tronc de cône (24) et ladite partie convexe (20).

7. Piège selon l'une quelconque des revendications 1 à 6, **caractérisé en ce qu'**il (4) comprend un tronc de cône dont la base plus petite forme une ouverture d'accès (34) à ladite chambre (2) et est positionnée de manière qu'elle est tournée vers l'intérieur de ladite chambre (2).

8. Piège selon la revendication 7, **caractérisé en ce qu'**il comprend un deuxième cône agencé de manière que ladite base plus petite de ce tronc de cône est tournée vers le sommet dudit deuxième cône et **en ce que** le sommet dudit cône comprend une (54) sortie pour des liquides et la surface intérieure dudit tronc de cône est substantiellement lisse.

9. Piège selon l'une quelconque des revendications 1 à 8, **caractérisé en ce que** ledit couvercle (6) comprend une deuxième feuille flexible (30) qui peut être roulée et est pourvue d'un deuxième moyen de fermeture (28) afin de fixer ladite position fermée.

10. Piège selon la revendication 9, **caractérisé en ce que** lesdites première et deuxième feuilles (8,30) sont spéculairement symétriques.

11. Piège selon l'une quelconque des revendications 1 à 6, **caractérisé en ce que** ledit couvercle (6) est une feuille plate (58).

12. Piège selon la revendication 1, **caractérisé en ce qu'**il a une deuxième feuille (30) dans la forme d'un tronc de cône dont la base plus petite forme une ouverture d'accès (34) à ladite chambre (2) et est tournée vers l'intérieur de ladite chambre (2) et comprend en plus un récipient laminaire (56).

13. Piège selon l'une quelconque des revendications 1 à 10, **caractérisé en ce qu'**il est fait d'un matériel biodégradable ou apte pour le compostage bio.

14. Procédé pour la fabrication d'un piège pour insectes volants qui inclut une chambre intérieure (2) pour confiner les insectes et qui est accessible aux insectes à travers au moins une entrée d'accès appropriée pour lesdits insectes, comprenant les étapes de:
a. formation d'au moins une partie de ce piège (1) en roulant une feuille flexible (8,30) à partir d'une position ouverte vers une position fermée afin de former un corps tridimensionnel qui est ouvert pour le moins dans une de ses extrémités;
b. fixation de ladite position fermée de cette feuille (8,30) à travers un premier moyen de fermeture (12);
**caractérisé en ce que** ledit piège comprend une base (4) et un couvercle (6) et **en ce qu'**il comprend de manière additionnelle une quantité d'étapes dans lesquelles:
c. ladite première feuille (8) est roulée dans la forme d'un tronc de cône supérieur (24) qui peut être connecté audit couvercle (6) à travers un premier moyen de couplage (10); et
d. une partie inférieure, creuse, convexe (20) est connectée à la base plus petite dudit tronc de cône (24) à travers un deuxième moyen de couplage (22) mutuel.

15. Procédé selon la revendication 14, **caractérisé en ce qu'**il comprend additionnellement une étape pour former ledit couvercle (6) en roulant une deuxième feuille flexible (30) à partir d'une position ouverte vers une position fermée afin de former un corps tridimensionnel ouvert pour le moins dans une de ses extrémités à travers un deuxième moyen de fermeture (28) afin de fixer ladite position fermée.
